# EUROPEAN PATENT APPLICATION

(11) **EP 2 286 704 A2**
(43) Date of publication of application: **23.02.2011**
(21) Application number: 09758495.7
(22) Date of filing: 01.06.2009
(51) Int. Cl.: A47L 9/28

(54) **ROBOT CLEANER SYSTEM AND METHOD FOR CONTROLLING A ROBOT CLEANER**

(30) Priority: 02.06.2008 KR 20080051776
(71) Applicant: Woongjin Coway Co., Ltd., Chungcheongnam-do 314-895 (KR)
(72) Inventor: CHOI, In-Gyue, Seoul 151-919 (KR); DAN, Chul-Soon, Seoul 151-919 (KR)
(74) Representative: Luderschmidt, Schüler & Partner
(86) International application number: PCT/KR2009/002907
(87) International publication number: WO 2009/148242

(57) **Abstract**

The present invention relates to a robot cleaner system and a method of controlling a robot cleaner. When cleaning start information is received, a control unit (17) of the robot cleaner scans one cleaning area (30), thus calculating a cleaning time. The control unit performs cleaning of the cleaning area. When a signal transmitted from a transmission device (20) is received, the control unit detects which transmitter transmitted the signal. The control unit determines whether a time for which a signal transmitted from a same transmitter has been received is equal to or longer than a preset period. If the time is shorter than the preset period, the control unit continuously performs cleaning. If the time for which the transmitted signal has been received is equal to or longer than the preset period, the control unit moves the robot cleaner until a signal transmitted from another transmitter is received.

## Description

### [Technical Field]

The present invention relates, in general, to a robot cleaner system including a robot cleaner and a transmission device and a method of controlling the robot cleaner. More particularly, the present invention relates to a robot cleaner system including a transmission device having a plurality of transmitters and a robot cleaner having a plurality of receivers, and a method of controlling the robot cleaner so as to effectively clean an area targeted for cleaning using the transmission device and the receivers.

### [Background Art]

Generally, robots have been developed for industrial use, and these have been used as part of factory automation or used to collect information instead of human beings in extreme environments which human beings cannot tolerate. As robots have recently been used for the highly advanced space development industry, the fields of robotics have been continuously developed, and have recently accomplished the development of even human-friendly robots for home use. A representative application example of the human-friendly robot for domestic use may be a robot cleaner.

Generally, a robot cleaner refers to a device which performs a cleaning operation of sucking dust and impurities from the floor while moving by itself within the certain ranged work area without requiring a user's manipulation. Such a robot cleaner determines the distance to obstacles such as furniture, office supplies and walls installed within a work area such as in the home or office, by using a sensor and a camera, and performs an ordered operation while moving so as not to collide with the obstacles mentioned above using the determined information.

However, such a conventional robot cleaner is disadvantageous because the function of detecting its own location within a work area is not assigned, and the cleaning path is controlled only by obstacles, and thus, the time required for cleaning a specific region may assume a greater proportion of the total cleaning time in some circumstances. In this case, there is a problem in that the cleaning time may be disadvantageously decreased at locations actually requiring cleaning, thus making it impossible to realize cleaning effects desired by the user. That is, a robot cleaner calculates a required cleaning time or the like by scanning the entire cleaning area before starting to clean, and then performs cleaning within the calculated cleaning time. Herein, as the time spent cleaning a specific region increases, a cleaning region having relatively decreased cleaning time is also present.

Further, there is a problem in that, as the cleaning time increases superfluously in a specific region, the power consumption of the robot cleaner greatly increases. That is, even if the robot cleaner performed cleaning for the calculated time, a user is not satisfied with the results of cleaning and uses the robot cleaner to again do the cleaning when the above problem occurs, thus increasing the power consumption of the robot cleaner.

Furthermore, there is a problem in that, in an area which has less necessity for cleaning but which is complicated, a robot cleaner spends a lot of time cleaning, so that if the power of a charger decreases a region actually requiring cleaning may not get cleaned.

### [Disclosure]

### [Technical Problem]

Accordingly, the present invention has been made keeping in mind the above problems, and an object of the present invention is to provide a method of controlling a robot cleaner, which detects a signal transmitted from a transmission device and allows a robot cleaner to range out of a small region in which cleaning is continuously being performed for a preset period or longer.

### [Technical Solution]

In accordance with one embodiment of the present invention to accomplish the above object, there is provided a method of controlling a robot cleaner, comprising a calculation step of, when cleaning start information is received, a control unit of the robot cleaner scanning one cleaning area including a plurality of small regions by driving a driving unit of the robot cleaner, thus calculating a cleaning time for the cleaning area; a cleaning step of the control unit performing cleaning of the cleaning area by driving the robot cleaner; a detection step of, when a signal transmitted from a transmission device located in the cleaning area is received during performance of cleaning, the control unit detecting which transmitter, among a plurality of transmitters mounted in the transmission device, transmitted the signal; a determination step of the control unit determining using results of the detection whether a time for which a signal transmitted from a same transmitter that transmitted the signal has been received is equal to or longer than a preset period stored in a storage unit of the robot cleaner; a continuous cleaning step of, if it is determined that the time for which the transmitted signal has been received is shorter than the preset period, the control unit continuously performing cleaning of a small region in which the robot cleaner is located by driving the robot cleaner; and a movement step of, if it is determined that the time for which the transmitted signal has been received is equal to or longer than the preset period, the control unit moving the robot cleaner until a signal transmitted from another transmitter is received.

Preferably, the preset period may be determined by the control unit using a number of transmitters and the cleaning time.

Preferably, the determination step may be performed such that the control unit determines using the results of the detection whether a sum of discontinuous times for which the signal transmitted from the same transmitter has been received is equal to or longer than the preset period.

Preferably, the transmission device may be located at a center of the cleaning area.

Preferably, the continuous cleaning step may comprise a changing step of changing a movement path of the robot cleaner when the robot cleaner receives a signal other than the transmitted signal.

Preferably, the robot cleaner comprises three or more receivers, and the three or more receivers are located on a top surface of the robot cleaner and spaced apart from one another at regular intervals so that the receivers receive signals in all directions covering 360°.

In this case, preferably, the three or more receivers may comprise one or more of a forward receiver located in a main movement direction of the robot cleaner and a backward receiver located in a direction opposite the main movement direction of the robot cleaner, the detection step comprises the step of the control unit detecting which receiver among the three or more receivers received a signal, and the movement step comprises the step of, if one of the forward receiver and the backward receiver received a signal as a result of the detection, rotating the robot cleaner in either a right or a left direction.

In accordance with another embodiment of the present invention to accomplish the above object, there is provided a robot cleaner system, comprising a robot cleaner for cleaning a cleaning area including a plurality of small regions, a transmission device including a plurality of transmitters, wherein the robot cleaner comprises a storage unit for storing a preset period; a driving unit for driving the robot cleaner; and a reception unit for receiving signals transmitted from the transmitters; and a control unit for continuously performing cleaning if a time for which each transmitted signal has been received is shorter than the preset period, whereas moving the robot cleaner until a signal transmitted from another transmitter is received if the time for which the transmitted signal has been received is equal to or longer than the preset period.

### [Advantageous Effects]

The present invention is advantageous in that, since it detects a signal transmitted from a transmission device and determines the direction, in which cleaning is currently being performed, with respect to the transmission device, thus suitably allocating cleaning time to a plurality of small regions included in one cleaning area.

Further, when the robot cleaner ranges out of a certain small region before the time allocated for cleaning it has expired, the robot cleaner can promptly return back to the small region, thus further improving cleaning efficiency.

Furthermore, after the robot cleaner is done cleaning a certain small region, the robot cleaner can effectively change its direction and can promptly move to another small region, thus further improving cleaning efficiency.

### [Description of Drawings]

FIG. 1 is a plan view showing a robot cleaner system composed of a robot cleaner and a transmission device according to an embodiment of the present invention;
FIG. 2 is a conceptual view showing the internal construction of a robot cleaner according to an embodiment of the present invention; and
FIG. 3 is a flowchart showing a method of controlling a robot cleaner according to an embodiment of the present invention.

### <Description of reference characters of important parts>

- 10:: robot cleaner
- 20:: transmission device
- 30:: cleaning area

### [Best Mode]

Hereinafter, embodiments of the present invention will be described in detail with reference to the attached drawings.

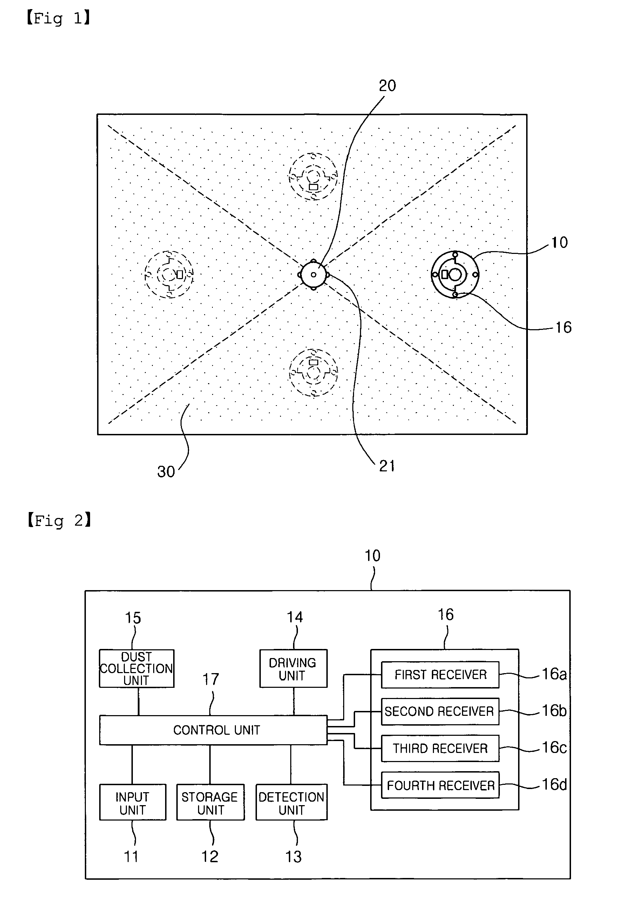

FIG. 1 is a view illustrating a robot cleaner system composed of a robot cleaner and a transmission device according to the present invention, which shows in detail a plan view seen from the ceiling of a cleaning area.

As shown in FIG. 1, the robot cleaner system according to an embodiment of the present invention includes a transmission device 20 installed on the ceiling of a cleaning area 30 and configured to transmit infrared rays in all directions covering 360°, and a robot cleaner 10 configured to receive a signal transmitted from the transmission device and perform cleaning while determining the direction in which the robot cleaner 10 is located with respect to the transmission device.

The transmission device 20 may be implemented using one of various types of radio waves, but infrared rays (IR) are preferably used in consideration of linearity and costs. Hereinafter, the present invention will be described with reference to an embodiment using infrared rays.

Further, the transmission device 20 is preferably implemented using four transmitters 21 so that it can transmit infrared signals in the north, south, east and west directions. However, it is apparent that the number of transmitters is not limited. Hereinafter, the present invention will be described with reference to an embodiment in which the transmission device 20 is composed of four transmitters 21.

The cleaning area 30 of FIG. 1 is divided into four small regions corresponding to the north, south, east and west directions around the transmission device 20 according to the number of transmitters 21. The areas of the small regions are preferably equivalent to each other if possible. To generate this equivalence, the transmission device 20 is preferably located at the center of the cleaning area, in particular, the center of the ceiling of the cleaning area.

Four infrared signals may have different pieces of identification information or may use different frequency bands so that they can be distinguished by the robot cleaner.

The robot cleaner 20 includes at least three receivers so that each of the receivers receives any one of the four infrared signals transmitted from the transmitters. The number of receivers is not necessarily identical to the number of transmitters of the transmission device.

In a preferred embodiment, the reception unit 16 includes four receivers. In this case, the reception unit 16 is preferably located on the top surface of the robot cleaner at an angle of 90° so that the robot cleaner can receive signals transmitted in all directions covering 360°. That is, the reception unit 16 preferably includes four receivers spaced apart from one another at regular intervals. However, it is apparent that the number of receivers is not limited. Hereinafter, the present invention will be described with reference to an embodiment of the robot cleaner including four receivers.

Further, the robot cleaner 10 may determine which transmitter 21 of the transmission device 20 transmitted a signal by analyzing a received infrared signal.

For example, when the main movement direction of the robot cleaner is assumed to be the forward direction, the four receivers correspond to a forward receiver, a backward receiver, a rightward receiver and a leftward receiver, respectively. The receivers are located on the top surface of the robot cleaner in the north, south, east and west directions, respectively.

The forward receiver receives a signal transmitted within a forward range of 90° with respect to the main movement direction of the robot cleaner. The backward receiver receives a signal transmitted within a backward range of 90° with respect to the main movement direction of the robot cleaner. The rightward receiver receives a signal transmitted within a right range of 90° with respect to the main movement direction of the robot cleaner. Further, the leftward receiver receives a signal transmitted within a left range of 90° with respect to the main movement direction of the robot cleaner.

In this way, the receivers can receive all signals transmitted in all directions covering 360° around the robot cleaner 10 and can determine a direction in which the robot cleaner is currently moving relative to the transmission device depending on which receiver received a signal.

For example, if the forward receiver of the robot cleaner receives a signal, this means that the transmission device is located in the main movement direction of the robot cleaner. As described above, since the transmission device 20 is preferably located at the center of the cleaning area, it can be seen that the robot cleaner is moving to the center of the cleaning area when the forward receiver receives a signal.

Similarly, if the rightward receiver of the robot cleaner receives a signal, this means that the transmission device 20 is located on the right side of the robot cleaner, that is, the robot cleaner is moving clockwise in the cleaning area.

The detailed construction of the robot cleaner 20 having the above functionality will be described in detail with reference to FIG. 2. FIG. 2 is a diagram illustrating the internal construction of a robot cleaner according to the present invention.

As shown in FIG. 2, a robot cleaner to which a method of controlling a robot cleaner according to the present invention is applied includes an input unit 11 for inputting various types of information, a storage unit 12 for storing various types of information required for the driving of the robot cleaner, a detection unit 13 for detecting obstacles or walls arranged in the movement path of the robot cleaner, a driving unit 14 for driving a motor and performing a cleaning function, a dust collection unit 15 for collecting dust, a reception unit 16 including a plurality of receivers 16a to 16d for receiving signals transmitted from the transmission device, and a control unit 17 for controlling the functions of the above components.

The input unit 11 receives various types of information required for operation of the robot cleaner, and may be implemented using a variety of buttons provided on the robot cleaner itself, or may use remote control (not shown) for communicating with the robot cleaner in a wireless manner. That is, the user may control the robot cleaner using the input unit such as buttons provided on the housing of the main body of the robot cleaner, or the remote control.

The storage unit 12 functions to store various types of programs required for the operation of the robot cleaner, or information about the operating process of cleaning set by the user. In particular, the user may set and limit a cleaning time to be spent in a specific region form among the total cleaning time, and store the set information in the storage unit.

The detection unit 13 is implemented using an infrared sensor, an ultrasonic sensor, etc., and is configured to detect obstacles or walls located in a forward direction or the direction of motion, detect the distance to the obstacles, and thus allow the robot cleaner to move without colliding with the obstacles. Meanwhile, signals detected by a variety of sensors of the detection unit are transmitted to the control unit.

The driving unit 14 is configured to drive the functions of the robot cleaner and may include a suction motor for sucking dust, a driving motor for driving the robot cleaner by rotating wheels, and a brush motor for driving a brush enabling suction to be easily performed. The driving unit independently drives respective motors to rotate in a forward or reverse direction in response to control signals output from the control unit. The direction of movement is designated by differently controlling the number of rotations of respective motors.

The dust collection unit 15 functions to collect dust from a floor while sucking air, and may include a suction motor, a suction inlet formed opposite the floor by the driving of the suction motor, and a dust collection chamber connected to the suction inlet through a suction tube and configured to collect sucked dust.

The reception unit 16 functions to receive radio signals transmitted from the transmitters 21 of the transmission device 20, and includes three or more receivers 16a to 16d. FIG. 2 shows a reception unit 16 composed of four receivers, that is, a first receiver 16a, a second receiver 16b, a third receiver 16c and a fourth receiver 16d. Meanwhile, as described above, the transmission device for transmitting infrared signals among various types of radio signals is preferably applied to the present invention. Respective receivers may also preferably have the function of receiving infrared signals. Further, in order to effectively receive infrared signals transmitted in all directions covering 360° of the robot cleaner, the receivers are preferably arranged on the top surface of the robot cleaner and spaced apart from one another at regular intervals.

The control unit 17 functions to perform an ordered cleaning operation by controlling the respective components of the robot cleaner having the above construction, and also function to detect the current location of the robot cleaner or the like and reset a cleaning area by analyzing an infrared signal received through the reception unit.

The present invention is configured such that the robot cleaner receives an infrared signal from the transmission device and resets a cleaning operation corresponding to the infrared signal. In addition to the above components, other components that may be applied to typical robot cleaners may be included in the robot cleaner of the present invention.

Hereinafter, a method in which the above-described robot cleaner performs a cleaning operation using infrared signals will be described in detail.

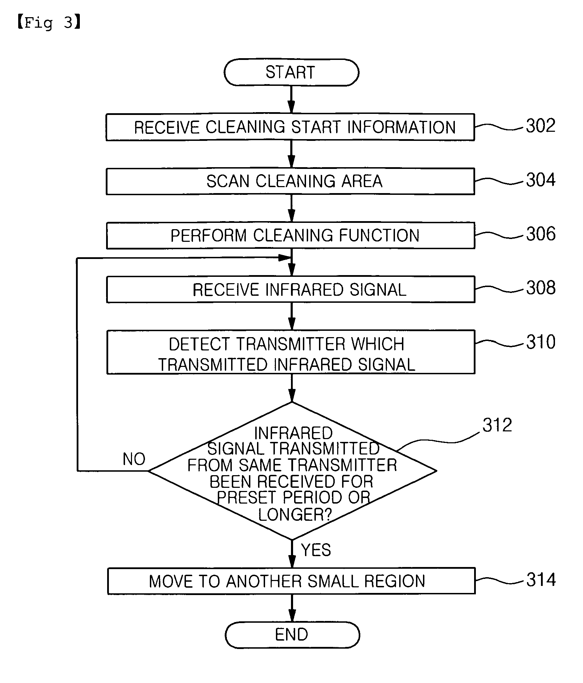

FIG. 3 is a flowchart showing an embodiment of a method of controlling a robot cleaner according to the present invention.

First, a user transmits cleaning start information to the robot cleaner through the input unit. That is, the user selects the start menu using a button provided on the robot cleaner itself or a button mounted on the remote control, and the control unit checks the reception of the cleaning start information at step 302. At this time, when a transmission unit capable of transmitting driving start information to the transmission device 20 is provided in the robot cleaner, the control unit may transmit the driving start information to the transmission device, and thus the transmission device 20 may be driven. However, when such a transmission unit is not provided in the robot cleaner, the user may also transmit driving start information to the transmission device 20 using the remote control in a wireless manner, or may drive the transmission device by turning on a switch connected to the transmission device in a wired manner.

The control unit, having received the cleaning start information, performs a calculation step of scanning the cleaning area 30 while moving the robot cleaner by driving the driving unit, thus calculating a cleaning time or the like at step 304. That is, the robot cleaner calculates the width of the cleaning area, the cleaning time, etc. while scanning the cleaning area before performing a cleaning operation.

The control unit, having received the cleaning start information, performs a cleaning step by driving the driving unit, the dust collection unit and the detection unit at step 306. That is, the driving unit 14 and the dust collection unit 15 are implemented using various motors, and thus perform the function of moving the robot cleaner and sucking dust. Meanwhile, the detection unit 13 detects a detection signal for an obstacle located in the movement path of the robot cleaner and transmits the detection signal to the control unit. The control unit 17 allows the robot cleaner to perform a normal cleaning function by controlling the driving unit in response to the detection signal.

Meanwhile, the control unit receives an infrared signal through the reception unit while the above cleaning function is performed at step 308. For this operation, the transmission device transmits the infrared signal. When four transmitters are included in the transmission device, the transmission device may simultaneously transmit infrared signals using the four transmitters, or may sequentially transmit infrared signals by sequentially driving the four transmitters.

When the relevant infrared signal is received, the control unit performs a detection step of detecting the order or location of the transmitter of the transmission device which transmitted the received infrared signal at step 310.

That is, as described above, the transmission device 20 includes at least four transmitters 21, and the respective transmitters transmit infrared signals to small regions, into which one cleaning area is divided, and have different pieces of identification information or use different frequencies. Further, since information about the respective transmitters is stored in the storage unit, the control unit can discriminate between received infrared signals with respective to respective transmitters.

That is, when the four transmitters have different pieces of identification information, analysis information that may match the identification information is stored in the storage unit. Accordingly, the control unit can detect which transmitter transmitted an infrared signal by comparing the identification information of the received infrared signal with the analysis information stored in the storage unit.

Further, when the four transmitters transmit infrared signals having different frequencies, analysis information about the frequencies transmitted by the respective transmitters is stored in the storage unit. Accordingly, the control unit can detect which transmitter transmitted an infrared signal by comparing the frequency of a received infrared signal with the analysis information stored in the storage unit.

After having detected which transmitter transmitted the infrared signal, the control unit performs a determination step of determining whether the time for which an infrared signal transmitted from the same transmitter that transmitted the infrared signal is received is equal to or longer than a predetermined time, that is, a preset period, at step 312.

That is, when one cleaning area is designated, a small region requiring much cleaning, a small region requiring average cleaning time, and a small region requiring simple cleaning may exist in the cleaning area. However, even in the case of the small region requiring much cleaning, there are few cases where more than a certain amount of time must be invested. Furthermore, in the case where the robot cleaner cannot move to another small region due to the complexity of a small region to be cleaned rather than an amount to be cleaned, this case must be controlled. Therefore, the control unit determines whether cleaning is continuously being performed only in a specific small region of one cleaning area, as described above, by determining whether the infrared signal transmitted from the same transmitter has been received for a preset period or longer.

The term 'preset period' means time information previously set in the storage unit in consideration of the above problems. Such a preset period may be determined using the number of transmitters and the cleaning area or the cleaning time. For example, when the number of transmitters is four and a cleaning area requires a cleaning time of one hour, a period of 15 minutes may be stored as the preset period. Meanwhile, the preset period may be previously stored by a manufacturer during a process for manufacturing the robot cleaner, or may also be set by each user.

Further, the time which is compared with the preset period and for which the signal transmitted from the same transmitter has been received may denote either a continuous time or the sum of discontinuous times.

The robot cleaner requires continuous movement to perform cleaning. In this case, the robot cleaner can move to another small region beyond a range of a specific small region. Since the robot cleaner receives another signal in another small region, it returns back to the original specific small region, but the time for which the signal transmitted from the same transmitter has been received may be discontinuous. If the sum of discontinuous times is compared with the preset period and is equal to or longer than the preset period, it means that the robot cleaner cleaned the specific small region for an excessively long time in spite of the discontinuity of the time.

If it is determined that the signal transmitted from the same transmitter has not been received for the preset period or longer, it means that cleaning of the specific small region was not excessively performed, and thus the control unit performs a continuous cleaning step of continuously performing cleaning of the small region in which cleaning is currently being performed without executing separate control.

However, if it is determined that the signal transmitted from the same transmitter has been received for the preset period or longer, it means that cleaning on the specific small region was excessively performed, and thus the control unit performs a movement step of moving the robot cleaner to another small region by driving the driving unit at step 314. That is, the control unit controls the driving unit until an infrared signal transmitted from a transmitter, other than the transmitter which transmitted the infrared signal that was received for the preset period or longer, is received, thus moving the robot cleaner.

Meanwhile, in the above procedure, the method of suitably allocating the cleaning time to one cleaning area has been described as an embodiment, but the present invention may also control the robot cleaner so that cleaning is performed only in a specific small region of one cleaning area.

In detail, when the user desires to clean only a specific small region of one cleaning area, for example, a first small region controlled by the first transmitter, the user may perform setting so that cleaning is performed in response to only an infrared signal transmitted from the first transmitter through the input unit of the robot cleaner. Therefore, the control unit determines information about the transmitter which transmitted the infrared signal received during the performance of cleaning at step 310, and may control the robot cleaner so that the robot cleaner enters the first small region after ranging out of a current small region when an infrared signal transmitted from the second, third or fourth transmitter, rather than the infrared signal transmitted from the first transmitter, is received.

In another embodiment of the present invention, the method includes a changing step of changing a movement path so that the robot cleaner returns back to its original small region when a signal, other than the signal transmitted during the continuous cleaning step, is transmitted.

"Continuous cleaning step is currently being performed" means that a small region which the robot cleaner is currently cleaning has not been sufficiently cleaned. However, since the robot cleaner performs cleaning while moving, it can move to another small region before completing cleaning of the place at which the robot cleaner is currently located. When moving to another small region, the robot cleaner of the present invention receives a signal from another transmitter, and thus the movement of the robot cleaner can be checked. That is, if the robot cleaner receives another signal during the continuous cleaning step, it means that the robot cleaner has ranged out of the current small region, and thus changes its movement path.

In a further embodiment of the present invention, at the detection step, the control unit can detect the current main movement direction of the robot cleaner depending on which receiver received a signal. For example, in the case of a robot cleaner which includes three receivers, the receivers may include either a forward or a backward receiver. If the forward receiver receives a signal, the robot cleaner is currently moving to the center, whereas if the backward receiver receives a signal, the robot cleaner is currently moving in a direction opposite that of the center.

In this embodiment, when the step 314 is performed, the above detection results may be used. That is, when the forward receiver receives a signal, the robot cleaner is currently moving to the center, and thus may be moved by changing its direction to a right or left direction so as to move to another adjacent small region. Even in the case where the backward receiver receives a signal, the robot cleaner may be moved by changing its direction to the right or left direction so as to move to another adjacent small region. When the right or leftward receiver receives a signal, the robot cleaner moves to another small region according to the current main movement direction without changing its direction.

Through the above description, those skilled in the art will appreciate that various modifications and changes are possible, without departing from the scope and spirit of the invention. Therefore, the technical scope of the present invention should be defined by the accompanying claims rather than the detailed description of the specification.

## Claims

1. A method of controlling a robot cleaner, comprising:
a calculation step of, when cleaning start information is received, a control unit of the robot cleaner scanning one cleaning area including a plurality of small regions by driving a driving unit of the robot cleaner, thus calculating a cleaning time for the cleaning area;
a cleaning step of the control unit performing cleaning of the cleaning area by driving the robot cleaner;
a detection step of, when a signal transmitted from a transmission device located in the cleaning area is received during performance of cleaning, the control unit detecting which transmitter, among a plurality of transmitters mounted in the transmission device, transmitted the signal;
a determination step of the control unit determining using results of the detection whether a time for which a signal transmitted from a same transmitter that transmitted the signal has been received is equal to or longer than a preset period stored in a storage unit of the robot cleaner;
a continuous cleaning step of, if it is determined that the time for which the transmitted signal has been received is shorter than the preset period, the control unit continuously performing cleaning of a small region in which the robot cleaner is located by driving the robot cleaner; and
a movement step of, if it is determined that the time for which the transmitted signal has been received is equal to or longer than the preset period, the control unit moving the robot cleaner until a signal transmitted from another transmitter is received.

2. The method according to claim 1, wherein the preset period is determined by the control unit using a number of transmitters and the cleaning time.

3. The method according to claim 1, wherein the determination step is performed such that the control unit determines using the results of the detection whether a sum of discontinuous times for which the signal transmitted from the same transmitter has been received is equal to or longer than the preset period.

4. The method according to any one of claims 1 to 3, wherein the transmission device is located at a center of the cleaning area.

5. The method according to any one of claims 1 to 3, wherein the continuous cleaning step comprises a changing step of changing a movement path of the robot cleaner when the robot cleaner receives a signal other than the transmitted signal.

6. The method according to any one of claims 1 to 3, wherein:
the robot cleaner comprises three or more receivers, and
the three or more receivers are located on a top surface of the robot cleaner and spaced apart from one another at regular intervals so that the receivers receive signals in all directions covering 360°.

7. The method according to claim 6, wherein:
the three or more receivers comprise one or more of a forward receiver located in a main movement direction of the robot cleaner and a backward receiver located in a direction opposite the main movement direction of the robot cleaner,
the detection step comprises the step of the control unit detecting which receiver among the three or more receivers received a signal, and
the movement step comprises the step of, if one of the forward receiver and the backward receiver received a signal as a result of the detection, rotating the robot cleaner in either a right or a left direction.

8. A robot cleaner system, comprising:
a robot cleaner for cleaning a cleaning area including a plurality of small regions;
a transmission device including a plurality of transmitters,
wherein the robot cleaner comprises:
a storage unit for storing a preset period;
a driving unit for driving the robot cleaner; and
a reception unit for receiving signals transmitted from the transmitters; and
a control unit for continuously performing cleaning if a time for which each transmitted signal has been received is shorter than the preset period, whereas moving the robot cleaner until a signal transmitted from another transmitter is received if the time for which the transmitted signal has been received is equal to or longer than the preset period.

9. The robot cleaner system according to claim 8, wherein the transmission device is located at a center of the cleaning area.

10. The robot cleaner system according to claim 8 or 9, wherein if the time for which the transmitted signal has been received is shorter than the preset period, the control unit changes a movement path of the robot cleaner when a signal other than the signal transmitted to the robot cleaner is transmitted.

11. The robot cleaner system according to claim 8 or 9, wherein the control unit calculates a cleaning time by scanning the cleaning area, and can determine the preset period using a number of transmitters and the cleaning time.

12. The robot cleaner system according to claim 8 or 9, wherein:
the reception unit comprises three or more receivers, and
the three or more receivers are located on a top surface of the robot cleaner and spaced apart from one another at regular intervals so that the receivers receive signals in all directions covering 360°.

13. The robot cleaner system according to claim 12, wherein:
the three or more receivers comprise one or more of a forward receiver located in a main movement direction of the robot cleaner and a backward receiver located in a direction opposite the main movement direction of the robot cleaner,
the control unit detects which receiver among the three or more receivers received the signal, and
the control unit rotates and moves the robot cleaner in either a right or a left direction if the time for which the transmitted signal has been received is equal to or longer than the preset period, and one of the forward receiver and the backward receiver received a signal.
